# EUROPÄISCHE PATENTSCHRIFT

(11) **EP 0 971 549 B1**
(45) Veröffentlichungstag und Bekanntmachung des Hinweises auf die Patenterteilung: **01.06.2005**
(21) Anmeldenummer: 99112578.2
(22) Anmeldetag: 01.07.1999
(51) Int. Cl.: H04Q 7/22

(54) **Verfahren zum Bereitstellen von Leistungsmerkmalen für mobile Teilnehmer über ein Kommunikationsnetz**
Method for informing mobile subscribers of service features in a communication network
Méthode pour informer les abonnés mobiles des caractéristiques des services sur un réseau de communication

(30) Priorität: 07.07.1998 DE 19830333
(43) Veröffentlichungstag der Anmeldung: 12.01.2000
(73) Patentinhaber: SIEMENS AKTIENGESELLSCHAFT, 80333 München (DE)
(72) Erfinder: Wehrend, Klaus, 82223 Eichenau (DE); Hünlich, Klaus, 85467 (DE)

(56) Entgegenhaltungen:
- WO-A-96/22000

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen, ständig zu. Aus Das virtuelle Büro" telcomreport, Heft 4, 1997, Siemens AG Berlin und München, ist bekannt, daß für ein effektives Erledigen der Aufgaben außerhalb des Unternehmens ein Zugriff auf die im lokalen Kommunikationsnetz des Unternehmens angebotenen Kommunikations-Leistungsmerkmale unabhängig vom Aufenthaltsort des Mitarbeiters notwendig ist. Zu diesen Leistungsmerkmalen zählen die zusätzlich zu den standardmäßig in einem z.B. ISDN orientierten Kommunikationsnetz bereitgestellten Leistungsmerkmale, wie beispielsweise Einrichten einer Konferenzschaltung oder Signalisieren eines Nachrichteneingangs.

Um an einem externen Endgerät die von einem Kommunikationssystem realisierten Leistungsmerkmale in gleicher Weise wie an einem internen Endgerät zur Verfügung stellen zu können - wie im Rahmen des 'Teleworkings' beabsichtigt -, ist in der europäischen Offenlegungsschrift EP-A-0 939 537 vorgeschlagen, endgeräteorientierte Signalisierungsinformationen, wie sie üblicherweise im Rahmen eines Signalisierungsprotokolls zwischen dem Kommunikationssystem und an diesem angeschlossenen internen Endgeräten übermittelt werden, zwischen dem Kommunikationssystem und dem externen Endgerät über eine, zusätzlich zur Nutzdatenverbindung eingerichtete Datenverbindung zu übermitteln.

Dies bedingt, daß am externen Endgerät zwei Nutzdatenverbindungen zur Verfügung stehen, um über eine erste Nutzdatenverbindung (z.B. ein erster ISDN-orientierter B-Kanal) die.Nutzdaten und über eine zweite Nutzdatenverbindung (z.B. ein zweiter ISDN-orientierter B-Kanal) die endgeräteorientierten Signalisierungsinformationen zu übermitteln. Des weiteren wird dabei vorausgesetzt, daß das externe Endgerät derart ausgebildet ist, daß die übermittelten endgeräteorientierten Signalisierungsinformationen ausgewertet werden können.

Um an einem externen Endgerät, insbesondere einem Mobilfunkendgerät die vom Kommunikationssystem realisierten Leistungsmerkmale zur Verfügung stellen zu können, ist in der europäischen Offenlegungsschrift EP-A-0 939 536 des weiteren.vorgeschlagen, die endgeräteorientierten Signalisierungsinformationen in Form von DTMF-Signalen (Dual Tone Multi Frequency) gemäß dem MFV-Wahlverfahren (Mehrfrequenz Wahlverfahren) über eine Sprachverbindung vom externen Mobilfunk-Endgerät zum Kommunikationssystem und umgekehrt zu übermitteln. Für die DTMF-Signale wird jeder Taste eines Endgeräts ein charakteristisches Signal zugeordnet, das bei Tastenbetätigung über die Sprachverbindung übermittelt wird. Die DTMF-Signale unterscheidet sich in Frequenz und Signaldauer von den üblicherweise über die Sprachverbindung übermittelten Daten, so daß die DTMF-Signale im Kommunikationssystem identifiziert und ausgewertet werden können.

Dies setzt jedoch voraus, daß der dem externen Endgerät zugeordnete Kommunikationsteilnehmer, die für eine Aktivierung der Leistungsmerkmale notwendigen, zum Teil langen und ungewöhnlichen Tastenkombinationen kennt. Anderenfalls nimmt die Aktivierung eines Leistungsmerkmals durch ein Abhören einer vom Kommunikationssystem am Endgerät zur Verfügung gestellten akustischen Benutzerführung eine unnötig große Zeitspanne in Anspruch.

Für eine Realisierung von Leistungsmerkmalen an einem mobilen Endgerät ist aus der internationalen Offenlegungsschrift WO 96/22000 ein so genannter "mobility server" bekannt, der an eine private Kommunikationsanlage angeschlossen ist. Der privaten Kommunikationsanlage sind dabei eine Mehrzahl von mobilen Endgeräten zugeordnet. Der "mobility server" überprüft die im Rahmen eines Verbindungsaufbaus von den mobilen Endgeräten angeforderten Leistungsmerkmale und gibt die Verbindung bei einer vorhandenen Berechtigung frei.

Der vorliegenden Erfindung liegt die Aufgabe zugrunde Maßnahmen anzugeben, durch welche, von einem Kommunikationssystem an internen Teilnehmeranschlüssen zur Verfügung gestellte Leistungsmerkmale an einem externen Endgerät auf einfach Weise bereitgestellt werden können. Die Lösung dieser Aufgabe erfolgt erfindungsgemäß mit den Merkmalen des Patentanspruchs 1.

Zum besseren Verständnis der Funktionsweise eines Kurznachrichtendienstes, erscheint es erforderlich zunächst noch einmal auf bekannte Prinzipien näher einzugehen.

Aus dem Buch Mobilfunk und Intelligente Netze - Grundlagen und Realisierung mobiler Kommunikation", Friedr. Vieweg & Sohn Verlagsgesellschaft, Braunschweig/Wiesbaden, 1995, insbesondere der Seiten 145 und 146, ist ein Kurznachrichtendienst SMS (Short Message Service) für Mobilfunk-Kommunikationssysteme bekannt. Mit Hilfe des bekannten Kurznachrichtendienstes SMS wird eine bidirektionale Informationsübertragung zwischen einem sogenannten Dienstezentrum - in der Literatur häufig mit 'SMS-Center' bezeichnet - und den, dem Dienstezentrum zugeordneten Mobilfunk-Endgeräten realisiert. Im Rahmen des sogenannten PtP-Dienstes (Point-to-Point-Service) sind zwischen dem Dienstezentrum und einem Mobilfunk-Endgerät Informationen bis zu einer Länge von 160 Zeichen übertragbar. Eine Übermittlung der Information erfolgt über die im Rahmen einer Mobilfunk-Verbindung zwischen dem Dienstezentrum und dem Mobilfunk-Endgerät zur Verfügung stehenden Signalisierungskanäle. Somit ist eine Übermittlung dieser Information, bei einer gleichzeitigen Übermittlung von im Rahmen einer bereits bestehenden Sprachverbindung zwischen dem Dienstezentrum und dem Mobilfunk-Endgerät zu übermittelnden Sprachdaten möglich.

Ein wesentlicher Vorteil der Erfindung besteht darin, daß die Anforderungen an das externe Endgerät lediglich darin bestehen, daß vom externen Endgerät ein Kurznachrichtendienst (SMS) unterstützt wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß ein Teilnehmer, der sich an einem externen Endgerät am Kommunikationssystem angemeldet hat, unter der gleichen Rufnummer zu erreichen ist, wie an einem ihm zugeordneten internen Endgerät.

Durch eine Zuweisung von fiktiven Anschlußports - in der Literatur vielfach als Pseudo-Anschlußports bezeichnet - können Teilnehmer die Leistungsmerkmale des Kommunikationssystems an einem externen Endgerät auch dann nutzen, wenn ihnen kein physikalisch vorhandenes internes Endgerät zugeordnet ist.

Ein Ausführungsbeispiel der Erfindung wird im folgenden anhand der Zeichnung näher erläutert.

Dabei zeigen
- Fig. 1:: ein Strukturbild zur schematischen Darstellung der am Teleworking-Konzept beteiligten wesentlichen Funktionseinheiten;
- Fig. 2:: ein Strukturbild zur schematischen Darstellung der wesentlichen Funktionseinheiten einer Teleworking-Teilnehmeranschlußbaugruppe eines Kommunikationssystems.

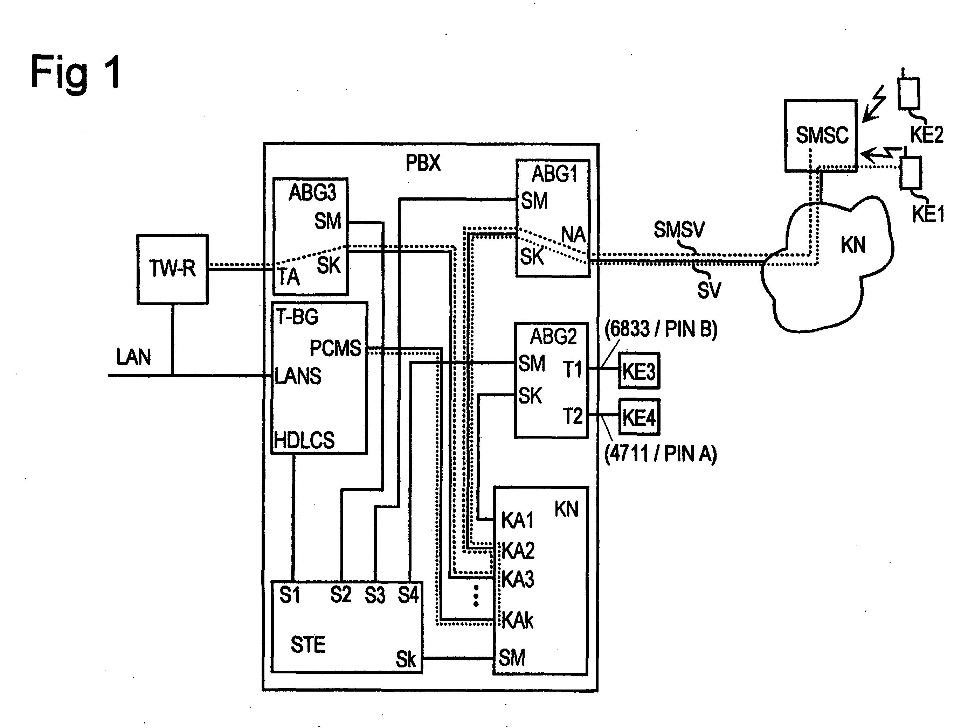

Fig. 1 zeigt eine schematische Darstellung eines Kommunikationssystems PBX mit einer in diesem angeordneten, als Teilnehmeranschlußeinheit ausgestalteten Teleworking-Teilnehmeranschlußbaugruppe - im weiteren mit Teleworking-Baugruppe T-BG bezeichnet. Das Kommunikationssystem PBX weist weitere Teilnehmer- bzw. Netzanschlußeinheiten zum Anschluß von Kommunikationseinrichtungen auf. Beispielhaft sind eine erste, eine zweite und eine dritte Anschlußeinheit ABG1, ABG2, ABG3 dargestellt. Des weiteren beinhaltet das Kommunikationssystem PBX ein mehrere bidirektionale, Zeitmultiplex-orientierte Koppel-Anschlüsse KA1,...,KAk aufweisendes Koppelfeldmodul KN, wobei die Koppel-Anschlüsse KA1,...,KAk als PCM-Anschlüsse (Puls Code Modulation) - auch als PCM-Highways, Speech-Highways oder S_{2M}-Anschlüsse bezeichnet - ausgestaltet sind. Jeder PCM-Highway umfaßt zum einen 30 Nutzkanäle, welche als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über einen Koppel-Anschluß KAk ist das Koppelfeldmodul KN mit einer bidirektionalen, Zeitmultiplex-orientierten PCM-Schnittstelle PCMS der Teleworking-Baugruppe T-BG verbunden. Über die weiteren Koppel-Anschlüsse KA1, KA2, KA3 ist das Koppelfeldmodul KN jeweils mit einem bidirektionalen, Zeitmultiplex-orientierten Anschluß SK der ersten, der zweiten und der dritten Anschlußeinheit ABG1, ABG2, ABG3 verbunden.

Des weiteren ist im Kommunikationssystem PBX eine mehrere Steueranschlüsse S1,...,Sk aufweisende Steuereinheit STE angeordnet. Über einen Steueranschluß Sk ist die Steuereinheit STE mit einem Steuereingang SM des Koppelfeldmoduls KN verbunden. Über die weiteren Steueranschlüsse S1,...,S4 ist die Steuereinheit STE zum einen mit einer auf der Teleworking-Baugruppe T-BG angeordneten HDLC-Schnittstelle HDLCS und zum anderen mit Steueranschlüssen SM der ersten, der zweiten und der dritten Anschlußeinheit ABG1, ABG2, ABG3 verbunden.

Über eine LAN-Schnittstelle LANS der Teleworking-Baugruppe T-BG ist ein lokales Rechnernetz LAN an das Kommunikationssystem PBX angeschlossen. Im lokalen Rechnernetz LAN ist ein Rechner, z.B. ein Personal Computer - im weiteren mit Teleworking-Rechner TW-R bezeichnet - angeordnet, der zur Steuerung der Teleworking-Baugruppe T-BG dient.

Über eine Netzanschluß NA der ersten Anschlußeinheit ABG1 ist das Kommunikationssystem PBX mit einem Kommunikationsnetz KN verbunden. Das Kommunikationsnetz KN kann beispielsweise ein ISDN-orientiertes Kommunikationsnetz oder ein analoges Kommunikationsnetz sein. An das Kommunikationsnetz KN ist eine, einem Funk-Kommunikationsnetz zugeordnete SMS-Kurznachrichtendienste-Einheit - im weiteren mit Dienstezentrum SMSC bezeichnet - angeschlossen, die eine Übermittlung von SMS-Kurznachrichten an, dem Funk-Kommunikationsnetz zugeordnete Endgeräte steuert. Dem Funk-Kommunikationsnetz sind ein erstes externes Mobilfunk-Endgerät KE1 und ein zweites externes Mobilfunk-Endgerät KE2 zugeordnet.

An einem ersten Teilnehmeranschluß T1 - beispielsweise einem S₀-Anschluß (2B + D, d.h. 2 ISDN-orientierte Nutzdatenkanäle und ein ISDN-orientierter Signalisierungskanal) - der zweiten Anschlußeinheit ABG2 ist ein erstes internes Endgerät KE3 mit einer kommunikationssysteminternen Rufnummer 6833 und an einem zweiten Teilnehmeranschluß T2 der zweiten Anschlußeinheit ABG2 ist ein zweites internes Endgerät KE4 mit einer kommunikationssysteminternen Rufnummer 4711 angeschlossen.

Des weiteren ist das Kommunikationssystem PBX über einen Teilnehmeranschluß TA der dritten Anschlußeinheit ABG3 mit dem Teleworking-Rechner TW-R verbunden. Der Anschluß des' Teleworking-Rechners TW-R an das Kommunikationssystem PBX kann z.B. über eine S₀-Schnittstelle des Teilnehmeranschlusses TA der dritten Anschlußeinheit ABG3 erfolgen. Dies erweist sich insbesondere dann als vorteilhaft, wenn das Kommunikationsnetz KN ein ISDN-orientiertes Kommunikationsnetz ist. Der Teleworking-Rechner TW-R kann alternativ direkt über eine im Teleworking-Rechner TW-R integrierte S₀-Schnittstelle mit dem Kommunikationsnetz KN - einem ISDN-orientierten Kommunikationsnetz - verbunden sein. Dies setzt voraus, daß dem Teleworking-Rechner TW-R eine eigene Rufnummer im Kommunikationsnetz KN zugeordnet ist.

Handelt es sich bei dem Kommunikationsnetz KN um ein analoges Kommunikationsnetz, so kann ein Anschluß des Teleworking-Rechners TW-R an das Kommunikationssystem PBX alternativ über eine analoge a/b-Schnittstelle des Teilnehmeranschlusses TA der dritten Anschlußeinheit ABG3 mit Hilfe eines Modems erfolgen. Das Modem ist dabei z.B. über eine V.24-Schnittstelle mit dem Teleworking-Rechners TW-R verbunden.

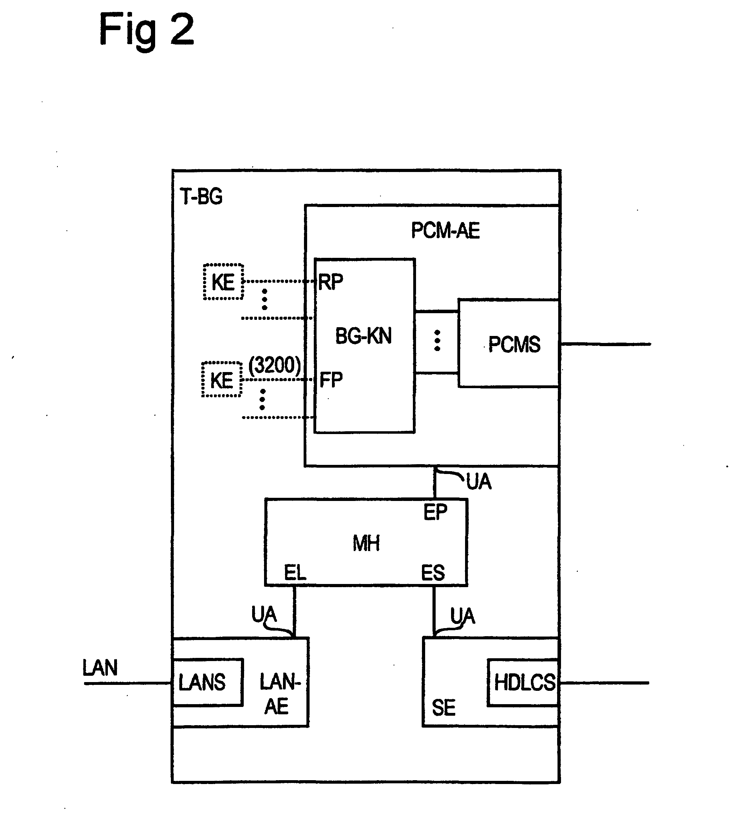

Fig. 2 zeigt eine schematische Darstellung der wesentlichen Funktionseinheiten der Teleworking-Baugruppe T-BG. Die Teleworking-Baugruppe T-BG weist eine LAN-Anschlußeinheit LAN-AE mit einer LAN-Schnittstelle LANS auf, wobei die LAN-Schnittstelle LANS mit dem lokalen Rechnernetz LAN verbindbar ist. Die Teleworking-Baugruppe T-BG weist weiter eine PCM-Anschlußeinheit PCM-AE mit einer bidirektionalen, Zeitmultiplex-orientierten PCM-Schnittstelle PCMS auf, wobei die PCM-Schnittstelle PCMS mit dem Koppel-Anschluß KAk des Koppelfeldmoduls KN des Kommunikationssystems PBX verbindbar ist. Des weiteren weist die PCM-Anschlußeinheit PCM-AE ein - mit der PCM-Schnittstelle PCMS verbundenes - Baugruppenkoppelfeldmodul BG-KN auf.

Des weiteren ist auf der Teleworking-Baugruppe T-BG eine Signalisierungseinheit SE, mit einer HDLC-Schnittstelle HDLCS angeordnet. Über die HDLC-Schnittstelle HDLCS ist die Signalisierungseinheit SE mit dem Steueranschluß S1 der Steuereinheit STE des Kommunikationssystems PBX verbindbar. Die LAN-Anschlußeinheit LAN-AE, die PCM-Anschlußeinheit PCM-AE und die Signalisierungseinheit SE sind jeweils über einen Anschluß UA mit einem Anschluß EL, EP, ES einer auf der Teleworking-Baugruppe T-BG angeordneten Umwandlungseinheit MH verbunden.

In der Umwandlungseinheit MH wird anhand von Adressinformationen - d.h. Ziel- und Ursprungsdaten - die in, über die PCM-Anschlußeinheit PCM-AE, die LAN-Anschlußeinheit LAN-AE oder die Steuereinheit SE empfangenen Daten enthalten sind, entschieden, ob die empfangenen Daten weiterzuleiten oder zur Steuerung der Teleworking-Baugruppe T-BG bestimmt sind. Sind die Daten weiterzuleiten, werden sie protokollgerecht konvertiert und an die Zieladresse übermittelt.

Eine Übermittlung von Datenpaketen zwischen der LAN-Anschlußeinheit LAN-AE und dem Teleworking-Rechner TW-R erfolgt beispielsweise auf Basis des TCP/IP-Protokolls (Transmission Control Protokoll / Internet Protokoll). Die Übermittlung von Datenpaketen zwischen der Steuereinheit STE des Kommunikationssystems PBX und der Signalisierungseinheit SE erfolgt auf Basis des HDLC-Protokolls (High Level Data Link Control).

Für eine Anmeldung des ersten externen Mobilfunk-Endgeräts KE1 am Kommunikationssystem PBX wird beispielsweise durch einen Teilnehmer eine sogenannte 'Teleworking'-Rufnummer am ersten externen Mobilfunk-Endgerät KE1 eingegeben. Daraufhin wird eine Sprachverbindung SV zwischen dem ersten externen Mobilfunk-Endgerät KE1 und der Teleworking-Baugruppe T-BG aufgebaut.

Für eine Identifizierung des ersten externen Mobilfunk-Endgeräts KE1 am Kommunikationssystem PBX wird ausgehend vom Teleworking-Rechner TW-R eine SMS-Verbindung SMSV über die dritte Anschlußeinheit ABG3, das Koppelfeldmodul KN und die erste Anschlußeinheit ABG1 zum Dienstezentrum SMSC aufgebaut. Anschließend wird eine im Teleworking-Rechner TW-R gespeicherte SMS-Nachricht über die SMS-Verbindung SMSV zum Dienstezentrum SMSC übermittelt, die an das erste externe Mobilfunk-Endgerät KE1 weitergeleitet und an einem Display des ersten externen Mobilfunk-Endgeräts KE1 ausgegeben wird. Diese SMS-Nachricht fordert den Teilnehmer dazu auf, die dem ersten externen Mobilfunk-Endgerät KE1 im Kommunikationsnetz KN zugeordnete Rufnummer einzugeben - im folgenden mit manueller Identifizierung bezeichnet. Zusätzlich wird für eine Authentifizierung des Teilnehmers, vom Teleworking-Rechner TW-R eine zweite gespeicherte SMS-Nachricht über die SMS-Verbindung SMSC an das erste externe Mobilfunk-Endgerät KE1 übermittelt, die den Teilnehmer dazu auffordert eine persönliche Kennziffer PIN (Personal Identification Number) einzugeben.

Diese in Form von SMS-Nachrichten über die SMS-Verbindung SMSV übermittelten Identifizierungs- und Authentifizierungsdaten werden an den Teleworking-Rechner TW-R übermittelt. Durch den Teleworking-Rechner TW-R wird das erste externe Mobilfunk-Endgerät KE1 z.B. durch einen Eintrag des ersten externen Mobilfunk-Endgeräts KE1 in einer - nicht dargestellten - Identifizierungs-Liste als identifiziert vermerkt, sofern dies nicht schon bei einer früheren Identifizierung erfolgt ist.

Durch die in den Authentifizierungsdaten übermittelte Kennziffer PIN wird anhand einer im Teleworking-Rechner TW-R gespeicherten - nicht dargestellten - Zuordnungs-Liste derjenige interne Teilnehmer-Anschlußport des Kommunikationssystems PBX ermittelt, über den sich der Teilnehmer am Kommunikationssystem PBX anmelden möchte. Wird im Rahmen der Authentifizierung beispielsweise die Kennziffer PIN A übermittelt, so erfolgt eine Anmeldung des ersten externen Mobilfunk-Endgeräts KE2 für das zweite interne Endgerät KE4. Zusätzlich oder alternativ zur Übermittlung der Kennziffer PIN kann der Teilnehmer dazu aufgefordert werden ein persönliches Paßwort zu übermitteln.

Wurde die dem ersten externen Mobilfunk-Endgerät KE1 im Kommunikationsnetz KN zugeordnete Rufnummer (z.B. im Rahmen eines Leistungsmerkmals 'calling party number') automatisch vom ersten externen Mobilfunk-Endgerät KE1 an den Teleworking-Rechner TW-R übermittelt - im folgenden mit automatischer Identifizierung bezeichnet - wird im Teleworking-Rechner TW-R überprüft, ob das erste externe Mobilfunk-Endgerät KE1 bereits identifiziert ist, d.h. ob bereits ein Eintrag für das erste externe Mobilfunk-Endgerät KE1 in der Identifizierungs-Liste vorhanden ist. Ist das erste externe Mobilfunk-Endgerät KE1 noch nicht identifiziert, wird durch den Teleworking-Rechner die zweite SMS-Nachricht über die SMS-Verbindung SMSC an das erste externe Mobilfunk-Endgerät KE1 übermittelt, die den Teilnehmer dazu auffordert, die persönliche Kennziffer PIN und/oder das persönliche Paßwort einzugeben.

Die vom Teilnehmer übermittelte Kennziffer PIN kann alternativ einem fiktiven Anschlußport des Kommunikationssystems PBX zugeordnet sein. Somit können auch Teilnehmer, denen kein physikalisch vorhandenes internes Endgerät zugeordnet ist, die Leistungsmerkmale des Kommunikationssystems PBX am externen Endgerät nutzen.

Anhand einer im Teleworking-Rechner TW-R gespeicherten - nicht dargestellten - Berechtigungs-Liste, welche die für das 'Teleworking' berechtigten kommunikationssysteminternen Rufnummern bzw. Kennziffern PIN enthält, findet eine Überprüfung der Anmeldung des ersten externen Mobilfunk-Endgeräts KE1 statt. Hat die Überprüfung die Anmeldung bestätigt, wird dem ersten externen Mobilfunk-Endgerät KE1 vom Teleworking-Rechner TW-R ein fiktiver Anschlußport - z.B. der fiktive Anschlußport FP mit der kommunikationssysteminternen Rufnummer 3200 - der Teleworking-Baugruppe T-BG zugewiesen. Gleichzeitig werden durch die Aktivierung des vom Kommunikationssystem PBX realisierten Leistungsmerkmals 'Anrufumleitung' alle an den, durch die kommunikationssysteminterne Rufnummer bzw. durch die Kennziffer PIN bezeichneten internen Teilnehmer-Anschlußport (z.B. der zweite Teilnehmeranschluß T2 der zweiten Anschlußeinheit ABG2 mit der kommunikationssysteminternen Rufnummer 4711) gerichteten Rufe an den fiktiven Anschlußport FP der Teleworking-Baugruppe T-BG umgeleitet.

Wird die Sprachverbindung SV nach dem Anmelden z.B. durch ein Auflegen des Hörers am ersten externen Mobilfunk-Endgerät KE1 unterbrochen (dies entspricht dem Normalfall), so ist eine erneute Identifizierung (Übermittlung der dem ersten externen Mobilfunk-Endgerät KE1 im Kommunikationsnetz KN zugeordneten Rufnummer) des ersten externen Mobilfunk-Endgeräts KE1 am Kommunikationssystem PBX notwendig. Im Rahmen einer manuellen Identifizierung müssen zusätzlich zu den Identifizierungsdaten die Authentifizierungsdaten übermittelt werden. Im Rahmen einer automatischen Identifizierung erfolgt die Identifizierung automatisch.

Zusätzlich werden von der Steuereinheit STE des Kommunikationssystems PBX zum zweiten internen Endgerät KE4 zu übermittelnde endgeräteorientierte Signalisierungsinformationen - die Anmeldung des ersten externen Mobilfunk-Endgeräts KE1 am Kommunikationssystem PBX mit der kommunikationssysteminternen Rufnummer bzw. Kennziffer des zweiten internen Endgeräts KE4 vorausgesetzt - an den fiktiven Anschlußport FP der Teleworking-Baugruppe T-BG umgeleitet. Die endgeräteorientierten Signalisierungsinformationen werden von der Steuereinheit STE des Kommunikationssystems PBX über die Teleworking-Baugruppe T-BG an den Teleworking-Rechner TW-R übermittelt.

Im Teleworking-Rechner TW-R wird eine von der Steuereinheit STE des Kommunikationssystems PBX an den fiktiven Anschlußport FP übermittelte Nachricht (z.B. Nachricht im Sprachbriefkasten des Teilnehmers gespeichert) bewertet, und in Fällen, in denen diese Nachricht an das erste externe Mobilfunk-Endgerät KE1 weiterzuleiten ist, in eine, der endgeräteorientierten Signalisierungsinformation entsprechende SMS-Nachricht umgesetzt. Die SMS-Nachricht wird anschließend über eine neu aufgebaute SMS-Verbindung SMSV an das Dienstzentrum SMSC übermittelt, welches die SMS-Nachricht an das erste externe Mobilfunk-Endgerät KE1 weiterleitet. Ist das erste externe Mobilfunk-Endgerät KE1 nicht aktiv, so wird die SMS-Nachricht im Dienstezentrum SMSC zwischengespeichert, bis eine Übermittlung an das erste externe Mobilfunk-Endgerät KE1 möglich ist.

Wird ausgehend von einem weiteren (externen oder internen) Endgerät ein Verbindungsaufbau mit dem zweiten internen Endgerät KE4 initiiert, wird - die Anmeldung des ersten externen Mobilfunk-Endgeräts KE1 am Kommunikationssystem PBX mit der kommunikationssysteminternen Rufnummer bzw. Kennziffer des zweiten internen Endgeräts KE4 vorausgesetzt - aufgrund der aktivierten Anrufumleitung eine Teilverbindung zwischen dem weiteren Endgerät und dem fiktiven Anschlußport FP Teleworking-Baugruppe T-BG aufgebaut. In einem weiteren Schritt wird anhand der in den Identifizierungsdaten übermittelten Rufnummer des ersten externen Mobilfunk-Endgeräts KE1 im Kommunikationsnetz KN, eine weitere Teilverbindung zwischen einem weiteren fiktiven Anschlußport RP der Teleworking-Baugruppe T-BG und dem ersten externen Mobilfunk-Endgerät KE1 aufgebaut. In einem abschließenden Schritt werden die Teilverbindung und die weitere Teilverbindung im Baugruppenkoppelfeldmodul BG-KN der Teleworking-Baugruppe T-BG gekoppelt, wodurch eine Endgeräteverbindung zwischen dem ersten externen Mobilfunk-Endgerät KE1 und dem weiteren Endgerät zustande kommt.

Bei einem vom ersten externen Mobilfunk-Endgerät KE1 veranlaßten Verbindungsaufbau mit einem weiteren (internen oder externen) Endgerät wird durch eine erneute Eingabe der 'Teleworking'-Rufnummer eine Sprachverbindung SV mit dem weiteren fiktiven Anschlußport RP der Teleworking-Baugruppe T-BG aufgebaut. Nach einem Übermitteln der Identifizierungsdaten bzw. zusätzlich der Authentifizierungsdaten über die SMS-Verbindung SMSV wird durch den Teleworking-Rechner TW-R eine gespeicherte SMS-Nachricht über die SMS-Verbindung SMSV an das erste externe Mobilfunk-Endgerät KE1 übermittelt, die den Teilnehmer über mögliche Benutzeraktionen, wie z.B. Ausgabe einer im Kommunikationssystem PBX für den Teilnehmer gespeicherten Sprachnachricht oder Aufbau einer Endgeräteverbindung ausgehend vom ersten externen Mobilfunk-Endgerät KE1 mit einem weiteren Endgerät informiert.

Durch die Eingabe einer signifikanten Tastenkombination am ersten externen Mobilfunk-Endgerät KE1 wird eine der Tastenkombination entsprechende SMS-Nachricht über die SMS-Verbindung SMSV an den Teleworking-Rechner TW-R übermittelt, die dem Kommunikationssystem PBX signalisiert, daß ausgehend vom fiktiven Anschlußport FP der Teleworking-Baugruppe T-BG eine Endgeräteverbindung mit einem weiteren (internen oder externen) Endgerät aufgebaut werden soll. Daraufhin wird von der Steuereinheit STE des Kommunikationssystems PBX eine Teilverbindung zwischen dem fiktiven Anschlußport FP der Teleworking-Baugruppe T-BG und dem Koppelfeldmodul KN des Kommunikationssystems PBX durch Belegen eines freien Nutzkanals des, das Koppelfeldmodul KN und die Teleworking-Baugruppe T-BG verbindenden PCM-Highways aufgebaut.

Nach einem Koppeln der Sprachverbindung SV mit der Teilverbindung im Baugruppenkoppelfeldmodul BG-KN der Teleworking-Baugruppe T-BG ertönt beim ersten externen Mobilfunk-Endgerät KE1 der Wählton. Die daraufhin am ersten externen Mobilfunk-Endgerät KE1 eingegebenen Wahlinformationen - beispielsweise 6833 für das erste interne Endgerät KE3 - werden an die Steuereinheit STE des Kommunikationssystems PBX weitergeleitet. Von der Steuereinheit STE des Kommunikationssystems PBX wird daraufhin eine Endgeräteverbindung zwischen dem ersten externen Mobilfunk-Endgerät KE1 und dem ersten internen Endgerät KE3 eingerichtet.

Besteht am ersten externen Mobilfunk-Endgerät KE1 die Möglichkeit, die dem ersten externen Mobilfunk-Endgerät KE1 im Kommunikationsnetz KN zugeordnete Rufnummer (z.B. im Rahmen eines Leistungsmerkmals 'calling party number') automatisch an die Teleworking-Baugruppe T-BG zu übermitteln, so kann der Teilnehmer durch Eingabe einer speziellen 'Teleworking'-Rufnummer einen Verbindungsaufbau mit dem weiteren externen oder internen Endgerät ausgehend vom Kommunikationssystem PBX initialisieren. Der Teleworking-Rechner TW-R erkennt anhand der speziellen 'Teleworking'-Rufnummer, daß vom ersten externen Mobilfunk-Endgerät KE1 eine Endgeräteverbindung zu einem weiteren externen oder internen Endgerät aufgebaut werden soll und nimmt den Ruf des ersten externen Mobilfunk-Endgeräts KE1 nicht an. In einem nächsten Schritt wird ausgehend vom Kommunikationssystem PBX anhand der automatisch übermittelten Rufnummer des ersten externen Mobilfunk-Endgeräts KE1 im Kommunikationsnetz KN eine Verbindung ausgehend vom weiteren fiktiven Anschlußport RP der Teleworking-Baugruppe T-BG zum ersten externen Mobilfunk-Endgeräts KE1 aufgebaut, so daß für den Teilnehmer am ersten externen Mobilfunk-Endgerät KE1 für die aufzubauende Endgeräteverbindung mit dem weiteren externen oder internen Endgerät keine Gebühren anfallen.

Die während einer zwischen dem ersten externen Mobilfunk-Endgerät KE1 und einem weiteren externen oder internen Endgerät bestehenden Endgeräteverbindung vom ersten externen Mobilfunk-Endgerät KE1 gesendeten Steuerinformationen werden in Form von SMS-Nachrichten über die SMS-Verbindung SMSV an den Teleworking-Rechner TW-R übermittelt. Die Steuerinformationen werden vom Teleworking-Rechner TW-R identifiziert und beispielsweise anhand einer - nicht dargestellten - Umsetzungs-Liste in endgeräteorientierte Signalisierungsinformationen umgewandelt. Diese umgewandelten endgeräteorientierte Signalisierungsinformationen werden über die Teleworking-Baugruppe T-BG an die Steuereinheit STE des Kommunikationssystems PBX weitergeleitet.

Nach Beendigung der zwischen dem ersten externen Mobilfunk-Endgerät KE1 und dem weiteren externen oder internen Endgerät bestehenden Endgeräteverbindung wird der weitere fiktive Anschlußport RP der Teleworking-Baugruppe T-BG vom Teleworking-Rechner TW-R freigegeben und steht somit für einen neuen Verbindungsaufbau zwischen einem beliebigen am Kommunikationssystem PBX angemeldeten Endgerät und einem weiteren Endgerät zur Verfügung. Der fiktive Anschlußport FP der Teleworking-Baugruppe T-BG bleibt dagegen dem ersten externen Mobilfunk-Endgerät KE1 zugeordnet und wird erst nach einem durch den Teilnehmer veranlaßten Abmelden des ersten externen Mobilfunk-Endgeräts KE1 am Kommunikationssystem PBX freigegeben. Nach dem Abmelden werden aufgrund der Deaktivierung der Anrufumleitung am Kommunikationssystem PBX, die von der Steuereinheit STE des Kommunikationssystems PBX an den Teilnehmer zu übermittelnden endgeräteorientierten Signalisierungsinformationen an den Anschlußport des dem Teilnehmer zugeordneten internen Endgeräts - beispielsweise an den Anschlußport des zweiten internen Endgeräts KE4 mit der kommunikationssysteminternen Rufnummer 4711 - übermittelt. Bei einem Anmelden eines weiteren externen Endgerätes mit der selben kommunikationssysteminternen Rufnummer bzw. Kennziffer wie das erste externe Mobilfunk-Endgerät KE1 wird der fiktive Anschlußport FP der Teleworking-Baugruppe T-BG dem weiteren externen Endgerät zugewiesen.

Auf der Teleworking-Baugruppe T-BG sind maximal 256 fiktive Anschlußports konfigurierbar. Des weiteren ist die Teleworking-Baugruppe T-BG in Form von PCM-Highways über 128 Nutzdatenkanäle mit dem Koppelfeldmodul KN des Kommunikationssystems PBX verbunden. Da für jede Endgeräteverbindung eines angemeldeten Endgerätes mit einem weiteren Endgerät zwei Nutzkanäle benötigt werden, können maximal 64 Endgeräteverbindungen gleichzeitig über die Teleworking-Baugruppe T-BG aufgebaut werden. Da bei maximal 64 gleichzeitig aufgebauten Endgeräteverbindungen 64 weitere fiktive Anschlußports RP der Teleworking-Baugruppe T-BG durch die Endgeräteverbindungen belegt sind, stehen 191 freie fiktive Anschlußports FP der Teleworking-Baugruppe T-BG für ein Anmelden von Endgeräten am Kommunikationssystem PBX zur Verfügung.

## Patentansprüche

1. Verfahren zum Bereitstellen von durch ein Kommunikationsystem (PBX) realisierten und an internen Teilnehmeranschlüssen verfügbaren Leistungsmerkmalen über ein Kommunikationsnetz (KN) an einem externen Endgerät (KE1),
**dadurch gekennzeichnet,**
**dass** durch Anmelden des externen Endgeräts (KE1) beim Kommunikationssystem (PBX) eine Kurznachrichtendienste-Verbindung (SMSV) zwischen dem externen Endgerät (KE1) und einem, über eine Teleworking-Teilnehmeranschlußbaugruppe (T-BG) des Kommunikationssystems (PBX) angeschlossenen Teleworking-Rechner (TW-R) eingerichtet wird,
**dass** am externen Endgerät (KE1) eingegebene Steuerinformationen in Form von Kurznachrichten (SMS-Nachrichten) über die Kurznachrichtendienste-Verbindung (SMSV) an den Teleworking-Rechner (TW-R) übermittelt werden, und
**dass** die durch den Teleworking-Rechner (TW-R) empfangenen Kurznachrichten (SMS-Nachricht) in endgeräteorientierte Signalisierungsinformationen, wie sie üblicherweise im Rahmen eines Signalisierungsprotokolls zwischen internen Endgeräten (KE4) und dem Kommunikationssystem (PBX) zur Verfügung stehen, umgewandelt und über die Teleworking-Teilnehmeranschlußbaugruppe (T-BG) an eine Steuereinheit (STE) des Kommunikationssystems (PBX) übermittelt werden.

2. Verfahren nach Anspruch 1,
**dadurch gekennzeichnet,**
**daß** der Teleworking-Rechner (TW-R) über eine digitale Schnittstelle (S₀-Schnittstelle) einer Teilnehmeranschlußbaugruppe (ABG3) mit dem Kommunikationssystem (PBX) verbunden ist, und
**daß** die Kurznachrichtendienste-Verbindung (SMSV) über die Teilnehmeranschlußbaugruppe (ABG3) geführt wird.

3. Verfahren nach Anspruch 1,
**dadurch gekennzeichnet,**
**daß** der Teleworking-Rechner (TW-R) über ein Modem mit einer analogen Schnittstelle (a/b-Schnittstelle) einer Teilnehmeranschlußbaugruppe (ABG3) des Kommunikationssystems (PBX) verbunden ist, und
**daß** die Kurznachrichtendienste-Verbindung (SMSV) über die Teilnehmeranschlußbaugruppe (ABG3) geführt wird.

4. Verfahren nach Anspruch 1,
**dadurch gekennzeichnet,**
**daß** der Teleworking-Rechner (TW-R) über eine digitale Schnittstelle (S₀-Schnittstelle) an das Kommunikationsnetz (KN) angeschlossen ist, und
**daß** die Kurznachrichtendienste-Verbindung (SMSV) über die digitale Schnittstelle (S₀-Schnittstelle) geführt wird.

5. Verfahren nach einem der vorhergehenden Ansprüche,
**dadurch gekennzeichnet,**
**daß** an das Kommunikationsnetz (KN) eine Kurznachrichtendienste-Einheit (SMSC) angeschlossen ist, über welche die Kurznachrichtendienste-Verbindung (SMSV) geführt wird, und
**daß** zwischen der Kurznachrichtendienste-Einheit (SMSC) und dem externen Endgerät (KE1) im Rahmen der Kurznachrichtendienste-Verbindung (SMSV) eine bidirektionale Übermittlung der Kurznachrichten (SMS-Nachrichten) über eine Funkverbindung erfolgt.

6. Verfahren nach Anspruch 1,
**dadurch gekennzeichnet,**
**daß** im Rahmen der Kurznachrichtendienste-Verbindung (SMSV) eine bidirektionale Übermittlung der Kurznachrichten (SMS-Nachrichten) über eine Funkverbindung zwischen dem externen Endgerät (KE1) dem Teleworking-Rechner (TW-R) realisiert wird.

7. Verfahren nach einem der vorhergehenden Ansprüche,
**dadurch gekennzeichnet,**
**daß** durch den Teleworking-Rechner (TW-R) anhand von teilnehmerbezogenen Daten, die vom externen Endgerät (KE1) über die Kurznachrichtendienste-Verbindung (SMSV) übermittelt werden, eine Berechtigung zum Anmelden überprüft wird.

8. Verfahren nach Anspruch 7,
**dadurch gekennzeichnet,**
**daß** im Zuge einer Anmeldung ein erster fiktiver Teilnehmer-Anschlußport (FP) der Teleworking-Teilnehmeranschlußbaugruppe (T-BG) dem externen Endgerät (KE1) vom Teleworking-Rechner (TW-R) zugewiesen wird,
wobei Daten, die von der Steuereinheit (STE) an einen, durch die teilnehmerbezogenen Daten identifizierten internen Teilnehmeranschluß gerichtet sind, an den fiktiven Teilnehmer-Anschlußport (FP) umgeleitet werden.

9. Verfahren nach einem der vorhergehenden Ansprüche,
**dadurch gekennzeichnet,**
**daß** im Zuge eines der Anmeldung nachfolgend veranlaßten Verbindungsaufbaus zwischen dem externen Endgerät (KE1) und einem weiteren Endgerät (KE2, KE3), eine Endgeräteverbindung zwischen dem externen Endgerät (KE1) und dem weiteren Endgerät (KE2, KE3) über die Teleworking-Teilnehmeranschlußbaugruppe (T-BG) geführt wird.

10. Verfahren nach Anspruch 9,
**dadurch gekennzeichnet,**
**daß** die bei Bestehen der Endgeräteverbindung zwischen dem externen Endgerät (KE1) und dem Kommunikationssystem (PBX) vom externen Endgerät (KE1) an das Kommunikationssystem (PBX) zu übermittelnden Steuerinformationen über die Kurznachrichtendienste-Verbindung (SMSV) in Form von Kurznachrichten (SMS-Nachrichten) übermittelt werden.

11. Verfahren nach Anspruch 9 oder 10,
**dadurch gekennzeichnet,**
**daß** über die Teleworking-Teilnehmeranschlußbaugruppe (T-BG) gleichzeitig mehrere Endgeräteverbindungen für jeweils zwischen einem an dem Kommunikationssystem (PBX) angemeldeten externen Endgerät und einem weiteren Endgerät geführt werden.

12. Verfahren nach einem der vorhergehenden Ansprüche,
**dadurch gekennzeichnet,**
**daß** der interne Teilnehmeranschluß lediglich im Sinne eines fiktiven Anschlußports eingerichtet ist.

## Claims

1. Method for providing service features implemented by a communication system (PBX) and available at internal subscriber accesses via a communication network (KN) to an external terminal (KE1), **characterized in that**, through the registration of the external terminal (KE1) at the communication system (PBX) a short message service connection (SMSV) is established between the external terminal (KE1) and a teleworking computer (TW-R) connected via a teleworking subscriber access module (T-BG) of the communication system (PBX),
control information entered at the external terminal (KE1) in the form of short messages (SMS messages) is transmitted via the Short Message Service connection (SMSV) to the teleworking computer (TW-R), and
short messages (SMS messages) received by the teleworking computer (TW-R) are converted into a terminal-oriented signalling information as is normally available within it the framework of a signalling protocol between internal terminals (KE4) and the communication system (PBX) and transmitted via the teleworking subscriber access module (T-BG) to a control unit (STE) of the communication system (PBX).

2. Method according to Claim 1,
**characterized in that**
the teleworking computer (TW-R) is connected via a digital interface (s₀ interface) of a subscriber access module (ABG3) with the communication system (PBX), and that the Short Message Service connection (SMSV) is routed via the subscriber access module (ABG3).

3. Method according to Claim 1,
**characterized in that**,
the teleworking computer (TW-R) is connected via a modem to an analogue interface (a/b-interface) of a subscriber access module (ABG3) of the communication system (PBX), and
that the Short Message Service connection (SMSV) is routed via the subscriber access module (ABG3).

4. Method according to Claim 1,
**characterized in that**,
the teleworking computer (TW-R) is connected via a digital interface (s₀ interface) to the communication network (KN), and the Short Message Service connection (SMSV) is routed via the digital interface (So interface).

5. Method according to one of the previous claims
**characterized in that**,
A Short Message Service unit (SMSC) is connected to the communication network (KN) via which the Short Message Service connection (SMSV) is routed, and that between the Short Message Service Unit (SMSC) and the external terminal (KE1) within the framework of the Short Message Service connection (SMSV) a bidirectional transfer of short messages (SMS messages) is undertaken via a radio connection.

6. Method according to Claim 1,
**characterized in that**,
within the framework of the Short Message Service connection (SMSV) a bidirectional transfer of the short messages (SMS messages) via a radio connection is implemented between the external terminal (KE1) and the teleworking computer (TW-R).

7. Method according to one of the previous claims
**characterized in that**,
an authorization for registration is checked by the teleworking computer (TW-R) on the basis of subscriber-related data which is transmitted from the external terminal (KE1) via the Short Message Service connection (SMSV).

8. Method according to Claim 7,
**characterized in that**,
as part of a registration a first fictitious subscriber access port (FP) of the teleworking subscriber access module (T-BG) is assigned to the external terminal (KE1) by the teleworking computer (TW-R),
with data which is directed from the control unit (STE) to an internal subscriber access identified by the subscriber-related data being diverted to the fictitious subscriber access port (FP).

9. Method according to one of the previous claims
**characterized in that**,
as part of a connection set-up initiated following the registration between the external terminal (KE1) and a further terminal (KE2, KE3), a terminal connection between the external terminal (KE1) and the further terminal (KE2, KE3) is routed via the teleworking subscriber access module (T-BG).

10. Method according to Claim 9,
**characterized in that**,
the control information to be transferred from the external terminal (KE1) to the communication system (PBX), when a terminal connection exists between the external terminal (KE1) and the communication system (PBX), is transmitted via the Short Message Service connection (SMSV) in the form of short messages (SMS messages).

11. Method in accordance with Claim 9 or 10,
**characterized in that**,
via the teleworking subscriber access module (T-BG) a number of simultaneous terminal connections can be maintained for an external terminal registered at the communication system (PBX) and a further terminal.

12. Method in accordance with one of the previous claims,
**characterized in that**,
the internal subscriber access is merely created in the form of a fictitious access port.

## Revendications

1. Procédé de mise à disposition de services complémentaires, réalisés par un système de communication (PBX) et disponibles sur des accès d'abonné internes, à travers un réseau de communication (KN) sur un terminal externe (KE1),
**caractérisé en ce que**,
en déclarant le terminal externe (KE1) auprès du système de communication (PBX), une liaison pour services de messages courts (SMSV) est configurée entre le terminal externe (KE1) et un ordinateur de télétravail (TW-R) raccordé à travers un sous-groupe d'accès d'abonné de télétravail (T-BG) du système de communication (PBX),
**en ce que** des données de commande entrées sur le terminal externe (KE1) sont transmises sous forme de messages courts (messages SMS), à travers la liaison pour services de messages courts (SMSV), à l'ordinateur de télétravail (TW-R), et
**en ce que** les messages courts (messages SMS) réceptionnés par l'ordinateur de télétravail (TW-R) sont convertis en données de signalisation orientées terminaux, telles qu'elles sont généralement disponibles dans le cadre d'un protocole de signalisation entre des terminaux internes (KE4) et le système de communication (PBX), et transmis à travers le sous-groupe d'accès d'abonné de télétravail (T-BG) à une unité de commande (STE) du système de communication (PBX).

2. Procédé selon la revendication 1,
**caractérisé en ce que**
l'ordinateur de télétravail (TW-R) est relié au système de communication (PBX) à travers une interface numérique (interface S₀) d'un sous-groupe d'accès d'abonné (ABG3), et
**en ce que** la liaison pour services de messages courts (SMSV) est dirigée à travers le sous-groupe d'accès d'abonné (ABG3).

3. Procédé selon la revendication 1,
**caractérisé en ce que**
l'ordinateur de télétravail (TW-R) est relié via un modem à une interface analogique (interface a/b) d'un sous-groupe d'accès d'abonné (ABG3) du système de communication (PBX), et
**en ce que** la liaison pour services de messages courts (SMSV) est dirigée à travers le sous-groupe d'accès d'abonné (ABG3).

4. Procédé selon la revendication 1,
**caractérisé en ce que**
l'ordinateur de télétravail (TW-R) est relié au réseau de communication (KN) à travers une interface numérique (interface S₀), et
**en ce que** la liaison pour services de messages courts (SMSV) est dirigée à travers l'interface numérique (interface S₀).

5. Procédé selon l'une des revendications précédentes,
**caractérisé en ce que**
une unité pour services de messages courts (SMSC) est raccordée au réseau de communication (KN), via laquelle est dirigée la liaison pour services de messages courts (SMSV), et **en ce qu'**entre ladite unité pour services de messages courts (SMSC) et le terminal externe (KE1) a lieu dans le cadre de la liaison pour services de messages courts (SMSV) une transmission bidirectionnelle des messages courts (messages SMS) à travers une liaison radio.

6. Procédé selon la revendication 1,
**caractérisé en ce que**
dans le cadre de la liaison pour services de messages courts (SMSV), une transmission bidirectionnelle des messages courts (messages SMS) à travers une liaison radio est réalisée entre le terminal externe (KE1) et l'ordinateur de télétravail (TW-R).

7. Procédé selon l'une des revendications précédentes,
**caractérisé en ce que**
il est vérifié par l'ordinateur de télétravail (TW-R), à l'aide de données relatives aux abonnés transmises par le terminal externe (KE1) à travers la liaison pour services de messages courts (SMSV), une autorisation de déclaration.

8. Procédé selon la revendication 7,
**caractérisé en ce que**
au cours d'une déclaration, un premier port ficitif d'accès d'abonné (FP) du sous-groupe d'accès d'abonné de télétravail (T-BG) est assigné au terminal externe (KE1) par l'ordinateur de télétravail (TW-R),
les données adressées par l'unité de commande (STE) à un accès d'abonné interne identifié par les données relatives aux abonnés étant redirigées vers le port fictif d'accès d'abonné (FP).

9. Procédé selon l'une des revendications précédentes,
**caractérisé en ce que**
au cours d'un établissement de liaison initié à la suite de la déclaration entre le terminal externe (KE1) et un terminal supplémentaire (KE2, KE3), une liaison de terminaux entre le terminal externe (KE1) et le terminal supplémentaire (KE2, KE3) est dirigée à travers le sous-groupe d'accès d'abonné de télétravail (T-BG).

10. Procédé selon la revendication 9,
**caractérisé en ce que**
les données de commande à transmettre par le terminal externe (KE1) au système de communication (PBX) en cas d'existence de la liaison de terminaux entre le terminal externe (KE1) et le système de communication (PBX) sont transmises à travers la liaison pour services de messages courts (SMSV) sous forme de messages courts (messages SMS).

11. Procédé selon la revendication 9 ou 10,
**caractérisé en ce que**
plusieurs liaisons de terminaux à la fois pour à chaque fois un terminal externe déclaré auprès du système de communication (PBX) et un terminal supplémentaire sont dirigées à travers le sous-groupe d'accès d'abonné de télétravail (T-BG).

12. Procédé selon l'une des revendications précédentes,
**caractérisé en ce que**
l'accès d'abonné interne est configuré uniquement dans le sens d'un port d'accès fictif.
